# EUROPEAN PATENT SPECIFICATION

(11) **EP 2 752 135 B1**
(45) Date of publication and mention of the grant of the patent: **14.02.2018**
(21) Application number: 13196000.7
(22) Date of filing: 06.12.2013
(51) Int. Cl.: A47C 17/80, B60P 3/38, B62D 33/06, B60N 2/34

(54) **Temporary sleeping arrangement**
Temporäre Schlafanordnung
Agencement de couchage temporaire

(30) Priority: 13.12.2012 GB 201222509
(43) Date of publication of application: 09.07.2014
(73) Proprietor: Olphin, Richard, Stoke-on-Trent Staffordshire ST11 9RS (GB)
(72) Inventor: Olphin, Richard, Stoke-on-Trent Staffordshire ST11 9RS (GB)
(74) Representative: Swindell & Pearson Limited

(56) References cited:
- DE-A1- 1 932 664
- FR-A- 1 387 901
- FR-A5- 2 076 481
- US-A- 2 348 217
- US-A- 2 601 488
- US-A1- 2009 058 138

## Description

This invention concerns a temporary sleeping arrangement for a vehicle, and particularly but not exclusively for a motorhome.

Within motorhomes space is at a premium. It is though sometimes required to provide additional sleeping arrangements, and particularly for a young child which may for instance be a grandchild of the users. Any such temporary sleeping arrangement requires to not take up much space, but also to be comfortable and in particular secure.

US2348217, FR1387901 and DE1932664 each disclose a temporary sleeping arrangement for a vehicle which has at least two seats.

According to the present invention there is provided a temporary sleeping arrangement for a vehicle which has at least two seats, the arrangement comprising first and second elongate support members, with a fabric support structure extending between the first and second elongate support members, the first elongate support member being mounted to one side of the fabric support structure and being locatable in use extending between two support points one on either side of the interior of a vehicle, spaced from two of the vehicles seats, the second elongate support means being mounted to the other side of the fabric support structure, and locatable in use extending on the opposite side of the said two seats to the first elongate support member, the fabric support structure including first portions extending from the second elongate support member which each locate in use over the top of the back of a respective one of the seats, and second portions which extend from the second elongate support member, which portions locate in use to the sides of the backs of the seats, characterized in that the arrangement is configured for use with seats with headrests, with the fabric support structure first portions engageable over the respective headrests, the fabric support structure first portions being longer than the fabric support structure second portions.

The elongate support members may be in the form of poles, which poles may be made of metal. The elongate support members may extend through loops at the edges of the fabric support structure.

A pair of brackets may be provided mountable to respective opposite sides of a vehicle's interior, which brackets can support respective ends of first elongate support member.

The fabric support structure first portions may be provided each locatable respectively over one of a driver's or passenger's seat in a vehicle.

The fabric support structure second portions may be provided on the outer side of each of the first portions, and a fabric support structure second portion may also extend between the fabric support structure first portions.

The fabric support structure second portion extending between the fabric support structure first portions may be longer than the fabric support structure second portions provided on the outside of each of the first fabric support structure portions.

An embodiment of the present invention will now be described by way of example only and with reference to the accompanying drawings, in which :-
Fig. 1 is a diagrammatic plan view of a temporary sleeping arrangement according to the invention;

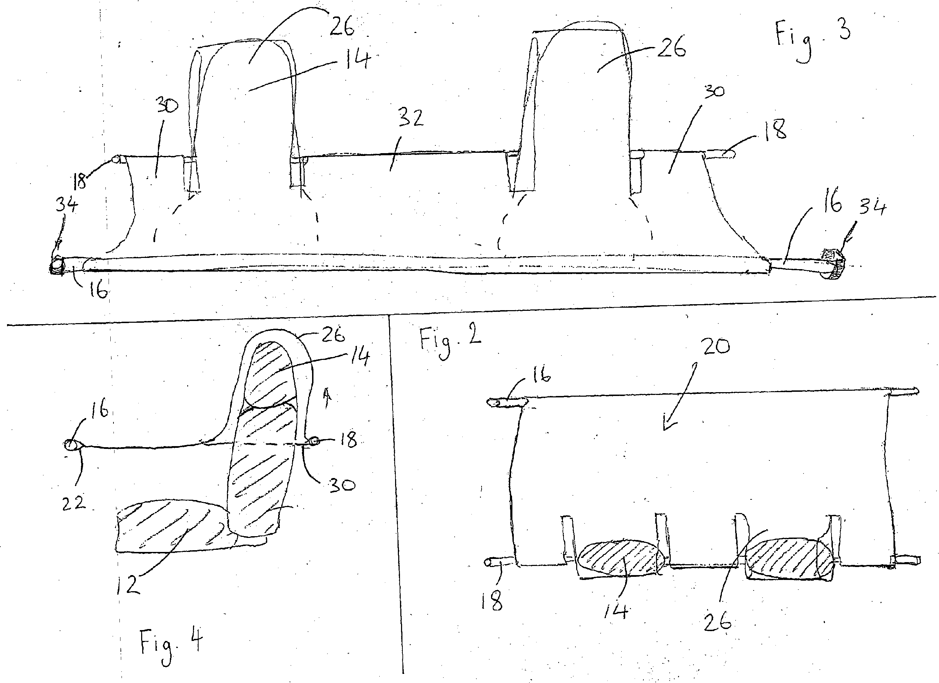

Fig. 2 is a diagrammatic plan view of the apparatus of fig. 1 in use;
Fig. 3 is a diagrammatic view of the arrangement of fig. 1 in use looking forwards in a vehicle; and
Fig. 4 is a diagrammatic sectional side view of the arrangement of fig. 1 in use.

The drawings show a temporary sleeping arrangement 10 mountable for instance in a motorhome with a pair of front seats 12 each having a headrest 14. In many instances such seats can be rotated to face rearwardly. The arrangement 10 includes first and second elongate support members 16, 18 which may be in the form of metal and for instance aluminium poles, but other materials can be used as required.

Extending between the first and second elongate members 16, 18 a fabric support structure 20 is provided. The structure 20 can be formed of any appropriate fabric, ideally providing strength, hygiene and also a lightweight arrangement. The structure 20 has a generally rectangular construction, with the first elongate member 16 extending within a loop 22 formed along one of the long sides of the rectangle.

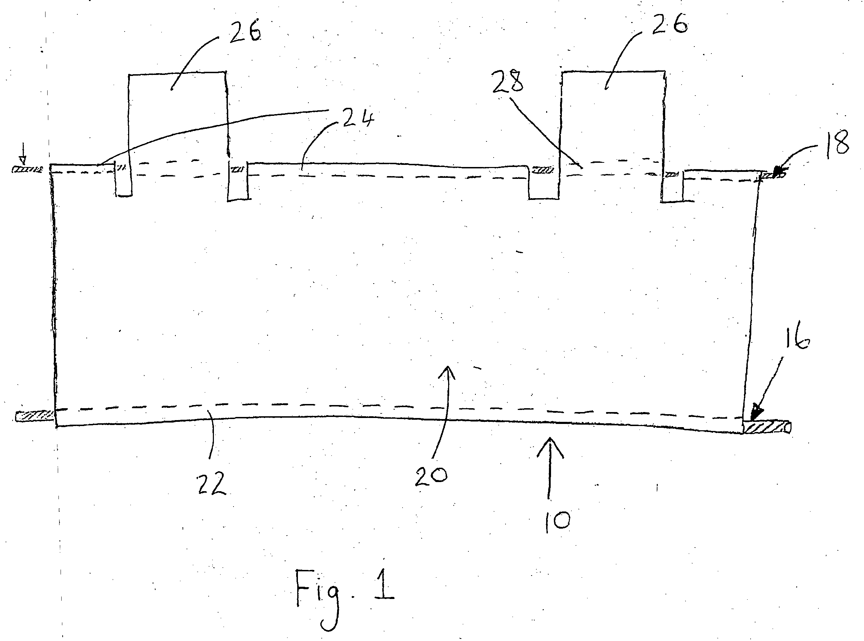

The second elongate member 18 extends in a loop 24 formed on the other long side of the rectangle. On the other long side of the rectangle two longer first portions 26 are provided which locate in use over the headrests 14. The outer edges of the first portions 26 are provided with a loop 28 to receive the second elongate member 18. In a non-use position as shown in fig. 1 the first portions will hang loosely for instance outwardly as shown.

On the outside of the first portions 26 two second portions 30 are provided with the loop 24 on their edge to receive the second elongate member 18. Between the two first portions 26 a longer further second portion 32 is provided, again with the loop 24 along its edge to receive the second elongate member 18.

A pair of mounting brackets 34 are provided which have a generally U-shaped cross section with upstanding walls extending outwardly from a mounting base. The brackets 34 are mountable at required positions on the interior walls of a motorhome facing each other. This position will usually be spaced behind the front seats 12.

In use to erect the arrangement 10, the front seats 12 will usually be turned rearwardly. The ends of the first elongate member 16 are located in the respective brackets 34 such that the first elongate member 16 extends therebetween.

The second elongate member 18 will be located behind, i.e. towards the front of the vehicle, the front seats 12 including the headrests 14, with the first portions 26 extending over the headrests 14. The arrangement 10 can be provided at a required tension using the sliding mounting of the front seat, and therefore can be tensioned by sliding the front seats towards the front of the vehicle.

In use a person, in particular a child can be supported on the arrangement 10 in for instance a sleeping bag or other bedding. The arrangement 10 has been found to be very stable in use.

When a person is on the arrangement 10 their weight will tend to pull the support structure 20 down. This would tend to pull the first portions 26 and hence elongate member 18 attached thereto, off the headrests 14. However, pulling down on the structure 20 will cause the second elongate member 18 where attached to the second portions 30, 32 to be pulled against the rear of the seats 12, which will prevent the elongate member 18 from riding up the back of the seats 12.

There is thus described a temporary sleeping arrangement which can readily be installed and used whilst providing a secure platform. The arrangement can also readily be stowed when not required, and particularly for instance when driving. The arrangement uses the existing seat backs in the vehicle, and hence prevents the requirement for an additional mounting in the vehicle. This also means that the arrangement can be adjusted by adjusting the position of the seats.

Various modifications may be made without departing from the scope of the invention. For example the elongate members could be made from multiple parts and/or could be telescopic so as to take up less space during storage. The fabric support structure could be made with different materials or could take a different form.

The first elongate member could be mounted to a vehicle in a different way, or the mounting brackets could take a different form. Pockets may be provided on the fabric support structure, and particularly on the parts which would fit over the rear of the headrests.

## Claims

1. A temporary sleeping arrangement 10 for a vehicle which has at least two seats 12, the arrangement 10 comprising first and second elongate support members, with a fabric support structure extending between the first and second elongate support members 16, 18, the first elongate support member 16 being mounted to one side of the fabric support structure 20 and being locatable in use extending between two support points one on either side of the interior of a vehicle, spaced from two of the vehicles seats 12, the second elongate support member 18 being mounted to the other side of the fabric support structure 20, and locatable in use extending on the opposite side of the said two seats 12 to the first elongate support member 16, the fabric support structure 20 including first portions 26 extending from the second elongate support member 18 which each locate in use over the top of the back of a respective one of the seats 12, and second portions 30, 32 which extend from the second elongate support member 18, which portions locate in use to the sides of the backs of the seats 12, **characterized in that** the arrangement 10 is configured for use with seats 12 with headrests 14, with the fabric support structure first portions 26 engageable over the respective headrests 14, the fabric support structure first portions 26 being longer than the fabric support structure second portions 30, 32.

2. An arrangement according to claim 1, **characterized in that** the elongate support members 16, 18 are in the form of poles.

3. An arrangement according to claim 2, **characterized in that** the poles are made of metal.

4. An arrangement according to any of the preceding claims, **characterized in that** the elongate support members 16, 18 extend through loops 24 at the edges of the fabric support structure 20.

5. An arrangement according to any of the preceding claims, **characterized in that** a pair of brackets 34 are provided mountable to respective opposite sides of a vehicle's interior, which brackets 34 can support respective ends of the first elongate support member 16.

6. An arrangement according to any of the preceding claims, **characterized in that** the fabric support structure first portions 26 are provided each locatable respectively over one of a driver's or passenger's seat 12 in a vehicle.

7. An arrangement according to any of the preceding claims, **characterized in that** the fabric support structure second portions 30, 32 are provided on the outer side of each of the first portions 26.

8. An arrangement according to any of the preceding claims, **characterized in that** a fabric support structure second portion 30, 32 also extends between the fabric support structure first portions 26.

9. An arrangement according to claim 8 when dependent on claim 7, **characterized in that** the fabric support structure second portion 30, 32 extending between the fabric support structure first portions 26 may be longer than the fabric support structure second portions 30, 32 provided on the outside of each of the first fabric support structure portions 26.

## Patentansprüche

1. Temporäre Schlafeinrichtung 10 für ein Fahrzeug mit mindestens zwei Sitzen 12, wobei die Schlafeinrichtung 10 erste und zweite längliche Stützelemente mit einer sich zwischen dem ersten und zweiten länglichen Stützelement 16, 18 erstreckenden Gewebestützstruktur umfasst, wobei das erste längliche Stützelement 16 auf einer Seite der Gewebestützstruktur 20 angebracht ist und sich im Gebrauch, zwischen zwei Stützpunkten, einer auf jeder Seite des Innenraums eines Fahrzeugs, beabstandet von zwei der Fahrzeugsitze 12, erstreckend, positionierbar ist, wobei das zweite längliche Stützelement 18 an der anderen Seite der Gewebestützstruktur 20 angebracht ist, und sich im Gebrauch, an der gegenüberliegenden Seite der beiden Sitze 12 zum ersten länglichen Stützelement 16 hin erstreckend, positionierbar ist, wobei die Gewebestützstruktur 20 sich vom zweiten länglichen Stützelement 18 weg erstreckende erste Abschnitte 26 beinhaltet, die jeweils im Gebrauch über der Oberseite des Rückens des entsprechenden einen Sitzes 12 positioniert sind, und zweite Abschnitte 30, 32, die sich vom zweiten länglichen Stützelement 18 weg erstrecken, wobei die Abschnitte im Gebrauch an der Seite der Rücken der Sitze 12 positioniert sind, **dadurch gekennzeichnet, dass** die Schlafeinrichtung 10 zum Gebrauch mit Sitzen 12 und Kopfstützen 14 konfiguriert ist, mit über die entsprechenden Kopfstützen 14 bringbaren ersten Abschnitten 26 der Gewebestützstruktur, wobei die ersten Abschnitte 26 der Gewebestützstruktur länger sind als die zweiten Abschnitte 30, 32 der Gewebestützstruktur.

2. Einrichtung nach Anspruch 1, **dadurch gekennzeichnet, dass** die länglichen Stützelemente 16, 18 in Form von Stangen ausgebildet sind.

3. Einrichtung nach Anspruch 2, **dadurch gekennzeichnet, dass** die Stangen aus Metall hergestellt sind.

4. Einrichtung nach einem der vorhergehenden Ansprüche, **dadurch gekennzeichnet, dass** sich die länglichen Stützelemente 16, 18 durch Schlaufen 24 an den Rändern der Gewebestützstruktur 20 hindurch erstrecken.

5. Einrichtung nach einem der vorhergehenden Ansprüche, **dadurch gekennzeichnet, dass** ein Paar von Halterungen 34 vorgesehen ist, die an entsprechenden einander gegenüberliegenden Seiten eines Fahrzeuginnenraums anbringbar sind, wobei die Halterungen 34 jeweilige Enden des ersten länglichen Stützelements 16 tragen können.

6. Einrichtung nach einem der vorhergehenden Ansprüche, **dadurch gekennzeichnet, dass** die ersten Abschnitte 26 der Gewebestützstruktur vorgesehen sind, um jeweils über einem Sitz 12 eines Fahrers oder eines Beifahrers im Fahrzeug positionierbar zu sein.

7. Einrichtung nach einem der vorhergehenden Ansprüche, **dadurch gekennzeichnet, dass** die zweiten Abschnitte 30, 32 der Gewebestützstruktur an der Außenseite jedes der ersten Abschnitte 26 vorgesehen sind.

8. Einrichtung nach einem der vorhergehenden Ansprüche, **dadurch gekennzeichnet, dass** sich ein zweiter Abschnitt 30, 32 der Gewebestützstruktur auch zwischen den ersten Abschnitten 26 der Gewebestützstruktur erstreckt.

9. Einrichtung nach Anspruch 8 in Abhängigkeit von Anspruch 7, **dadurch gekennzeichnet, dass** der zweite sich zwischen den ersten Abschnitten 26 der Gewebestützstruktur erstreckende Abschnitt 30, 32 der Gewebestützstruktur länger als die zweiten Abschnitte 30, 32 der Gewebestützstruktur auf der Außenseite jeder der ersten Abschnitte 26 der Gewebestützstruktur sein kann.

## Revendications

1. Un dispositif de couchage temporaire 10 pour un véhicule qui comporte au moins deux sièges 12, l'agencement 10 comprenant des premier et second éléments de support allongés, avec une structure de support en tissu s'étendant entre les premier et second éléments de support allongés 16, 18, le premier élément de support allongé 16 étant monté d'un côté de la structure de support en tissu 20 et pouvant être placé en utilisation en s'étendant entre deux points d'appui de chaque côté de l'intérieur d'un véhicule, espacés par rapport à deux des sièges du véhicules 12, le second élément de support allongé 18 étant monté de l'autre côté de la structure de support en tissu 20, et pouvant être placé en utilisation en s'étendant du côté opposé desdits deux sièges 12 jusqu'au premier élément de support allongé 16, la structure de support en tissu 20 comprenant des premières parties 26 s'étendant à partir du second élément allongé 18 qui se placent chacune en utilisation sur le dessus du dossier d'un siège respectif parmi les sièges 12, et des secondes parties 30, 32 qui s'étendent depuis le second élément de support allongé 18, lesquelles parties se placent en utilisation sur les côtés des dossiers des sièges 12, **caractérisé en ce que** l'agencement 10 est configuré pour être utilisé avec des sièges 12 avec des appuie-tête 14, les premières parties de structure de support en tissu 26 pouvant s'engager sur les appuie-tête respectifs 14, les premières parties de structure de support en tissu 26 étant plus longues que les secondes parties de structure de support en tissu 30, 32.

2. Agencement selon la revendication 1, **caractérisé en ce que** les éléments de support allongés 16, 18 ont la forme de tringles.

3. Agencement selon la revendication 2, **caractérisé en ce que** les tringles sont en métal.

4. Agencement selon l'une quelconque des revendications précédentes, **caractérisé en ce que** les éléments de support allongés 16, 18 s'étendent à travers des boucles 24 sur les bords de la structure de support en tissu 20.

5. Agencement selon l'une quelconque des revendications précédentes, **caractérisé en ce qu'**une paire de supports 34 est prévue pour pouvoir être montée sur des côtés opposés respectifs de l'intérieur d'un véhicule, lesquels supports 34 peuvent supporter des extrémités respectives du premier élément de support allongé 16.

6. Agencement selon l'une quelconque des revendications précédentes, **caractérisé en ce que** les premières parties de structure de support en tissu 26 sont prévues chacune pour pouvoir être placées respectivement sur l'un des sièges conducteur ou passager 12 dans un véhicule.

7. Agencement selon l'une quelconque des revendications précédentes, **caractérisé en ce que** les secondes parties de structure de support en tissu 30, 32 sont prévues sur le côté extérieur de chacune des premières parties 26.

8. Agencement selon l'une quelconque des revendications précédentes, **caractérisé en ce qu'**une seconde partie de structure de support en tissu 30, 32 s'étend également entre les premières parties de structure de support en tissu 26.

9. Agencement selon la revendication 8 lorsqu'elle dépend de la revendication 7, **caractérisé en ce que** la seconde partie de structure de support en tissu 30, 32 s'étendant entre les premières parties de structure de support en tissu 26 peut être plus longue que les secondes parties de structure de support en tissu 30, 32 prévues à l'extérieur de chacune des premières parties de structure de support en tissu 26.
